**Europäisches Patentamt**

**European Patent Office**

**Office européen des brevets**

(19)

(11) Veröffentlichungsnummer: **0 149 850**
**A2**

(12) # EUROPÄISCHE PATENTANMELDUNG

(21) Anmeldenummer: **84116395.9**

(22) Anmeldetag: **27.12.84**

(51) Int. Cl.⁴: **G 03 B 27/46**

(30) Priorität: **11.01.84 CH 131/84**

(43) Veröffentlichungstag der Anmeldung:
**31.07.85 Patentblatt 85/31**

(84) Benannte Vertragsstaaten:
**AT BE DE FR GB IT NL SE**

(71) Anmelder: **MERCHANDISING INTERNATIONAL S.A.**
**1, rue Pédro-Meylan**
**CH-1211 Genf 17(CH)**

(72) Erfinder: **Grossman, Walter, Dr.**
**Wettsteinstrasse 59**
**CH-8332 Russikon(CH)**

(74) Vertreter: **Patentanwälte Beetz sen. - Beetz jun. Timpe -**
**Siegfried - Schmitt-Fumian**
**Steinsdorfstrasse 10**
**D-8000 München 22(DE)**

(54) **Verfahren zur Entwicklungskontrolle für einen Colorprinter mit angeschlossener Papierentwicklung.**

(57) Im Colorprinter wird ein Teststreifen mit aufeinanderfolgenden sukzessive geringer belichteten Feldern erzeugt. Das erste Feld erhält dabei die Summe aller Belichtungen, das zweite Feld die Summe der zweiten und aller nachfolgenden Belichtungen und so fort. Das letzte Feld wird nicht belichtet. Nach der Entwicklung erlaubt der Teststreifen die Kontrolle der maximalschwärze, des Kontrasts, der Empfindlichkeit sowie der Schleierbildung. Durch das Verfahren kann die Entwicklungskontrolle jederzeit ohne wesentliche Verzögerung des Betriebs vorgenommen werden. Es lässt sich leicht verwirklichen, da bei modernen Printern keine mechanischen Eingriffe erforderlich sind.

EP 0 149 850 A2

Verfahren zur Entwicklungskontrolle für einen Colorprinter

mit angeschlossener Papierentwicklung

---------------------------------------------------------

Die Erfindung betrifft ein Verfahren zur Entwicklungskontrolle für einen Colorprinter mit angeschlossener Papierentwicklung.

Für die Bildqualität eines Colorprinters mit angeschlossener Entwicklungsanlage ist neben der richtigen Belichtung eine normgerechte Entwicklung notwendig. Die Verarbeitung von Farbpapieren in Entwicklungsmaschinen wird normalerweise durch die Mitentwicklung von vorbelichteten Teststreifen überwacht, die von den meisten Herstellern photographischer Farbpapiere geliefert werden. Nach der Entwicklung werden bezeichnete Grau- und/oder Farbfelder auf einem Densitometer ausgemessen und mit den entsprechenden Messungen eines Referenzstreifens, der vom Hersteller schon entwickelt der Packung beigelegt wird, verglichen. Die Abweichungen ergeben einen Hinweis auf mögliche Störungen im Entwicklungsprozess. Gemessen werden üblicherweise die Dichten im roten, grünen und blauen Spektralbereich, wobei das unbelichtete Papier den Schleier erkennen lässt, Testfelder niedriger Dichte ein

Nr. 43 286

Mass für die Empfindlichkeit darstellen und die Differenz der Dichten eines dunklen und eines hellen Feldes eine Masszahl für den Kontrast oder die Steilheit der Gradation des betreffenden Papiers ergibt. Oft wird auch noch ein voll durchbelichtetes Feld gemessen, um die maximale Schwärzung und die Ausentwicklung der Schicht zu kontrollieren. Dies gilt für negativ arbeitende Papiere, jedoch ist auch bei Umkehrpapieren das Verfahren ähnlich, lediglich ergibt die volle Durchbelichtung in diesem Fall das hellste Papierweiss, während in den unbelichteten Stellen die höchste Schwärzung entsteht.

Es wäre ideal, wenn eine solche Ueberprüfung der Entwicklung zu einem beliebigen Zeitpunkt erfolgen könnte, ohne dass speziell ein Teststreifen in die Entwicklungsanlage eingeführt werden müsste. Besonders bei kombinierten Kopier- und Entwicklungsanlagen ist die häufige Ueberprüfung der Entwicklung vorteilhaft, damit Abweichungen frühzeitig erkannt und korrigiert werden können, weil sonst die Korrektur häufig bei der Belichtung erfolgt und dadurch der Entwicklungsprozess immer mehr von der Norm abweichen kann.

Leider ist es nicht vorteilhaft, eine Ueberwachung der Entwicklung durch das Aufbelichten eines Testmusters über das normale Kopiersystem zu erreichen, da durch die Lichtstreuung im Objektiv eine gewisse Beeinflussung zwischen den einzelnen Testfeldern entsteht. Eine Kontaktbelichtung könnte dieses Problem lösen, doch verfügen lange nicht alle Printer über die Möglichkeit der Kontaktkopie, wie sie in vielen Fällen zur Aufbelichtung eines Textes für sogenannte Grusskarten verwendet wird.

Der Erfindung liegt deshalb die Aufgabe zugrunde, ein Verfahren zu schaffen, welches die vorstehenden Nachteile nicht aufweist und damit eine einfache und häufige Entwicklungskontrolle ermöglicht. Dies wird erreicht durch Belichtung eines Teststreifens im Printer, wobei das lichtempfindliche Material in mehreren Stufen in die Belichtungsfläche vorgeschoben wird und mehrere Belichtungen in der Weise erhält, dass das erste belichtete Feld die stärkste Belichtung erhält, die nachfolgenden Felder sukzessive etwas weniger belichtet werden und ein letztes Feld ohne jegliche Belichtung vorgeschoben wird, derart, dass das erste Feld die Summe aller ausgeführten Belichtungen erhält, das zweite Feld die Summe der zweiten und aller nachfolgenden Belichtungen und so fort und wobei diese Belichtungsserie automatisch abläuft und durch nachfolgende Entwicklung und Auswertung des Teststreifens.

Bei dem erfindungsgemässen Verfahren kann eine Ueberprüfung der Entwicklung jederzeit vorgenommen werden, wobei der Betriebsablauf nur unwesentlich verzögert wird. Da kein Muster auf die Felder aufbelichtet wird, spielt auch die Lichtstreuung im Objektiv keine Rolle. Ferner lässt sich das Verfahren leicht verwirklichen, da es bei modernen, digital gesteuerten Printern keine mechanischen Eingriffe erfordert, sondern lediglich die Programmierung einer Entwicklungs-Test Routine erfordert.

Bei einer bevorzugten Ausführungsart erfolgt die Belichtung eines Teststreifens in drei Stufen. Nach einem ersten Vorschub in das Belichtungsfeld von z.B. 3 cm erfolgt eine kräftige Belichtung, die ein erstes Feld nach der Entwicklung völlig schwarz werden lässt. Nach einem weiteren Vorschub von 3 cm erfolgt eine schwache Belichtung, die ein neutrales Grau von Dichte ca. 0,8 erzeugt. Nach einem dritten Vorschub erfolgt nochmals die gleiche Belichtung. Ein letzter Vorschub erfolgt, ohne dass eine Belichtung ausgeführt wird. Damit werden nach dem Abschneiden des Blattes und dem Durchlaufen der Entwicklungsvorrichtung 4 Streifen sichtbar: der vierte Streifen bleibt weiss und dient zur Schleiermessung; der dritte Streifen mit Dichte 0,8 dient der Empfindlichkeitsbestimmung; der zweite Streifen, der zweimal diese Belichtung erhalten hat, ergibt als Differenz zum vorhergehenden Streifen den Kontrast und schliesslich der erste Streifen mit voller Durchbelichtung und zwei Nachbelichtungen erlaubt die Kontrolle der Maximalschwärze. Streifen 1 und 4 sind dabei praktisch unabhängig von der Belichtung, 1 weil völlig durchbelichtet und 4 weil überhaupt nicht belichtet. Selbstverständlich können auch weitere Belichtungen erfolgen um Zwischenstufen zu erzeugen, sofern dies erwünscht ist. Wichtig ist die Belichtung mit abnehmender Stärke und die einfache Möglichkeit der Erzeugung eines Stufenstreifens ohne zusätzliche Hilfsmittel.

Die Auswertung kann mit einem Densitometer durch Messung jeder Stufe mit Rot, Grün und Blaufilter erfolgen. Die zwölf Messwerte werden dann mit Hilfe einer Tabelle oder unter Verwendung eines Rechnerprogramms ausgewertet.

Bei einer bevorzugten Ausführungsform des Verfahrens wird die Abweichung vom Sollwert als einstellige Zahl verschlüsselt.

Die 12 Messwerte, 4 Helligkeitsstufen in je 3 Farben gemessen, werden als Differenz zu den Sollwerten oder Referenzwerten bestimmt. In einem schmalen Band um den Sollwert spielt die Abweichung in der Praxis keine Rolle, der Code dafür ist 5. Eine Abweichung nach höheren Werten wird in 4 Zonen mit den Codezahlen 6 bis 9 bewertet, eine Abweichung nach tieferen Werten mit den Codezahlen 4 bis 1. Der der Norm entsprechende Test erhält deshalb eine 12-stellige Codezahl: 555'555'555'555. Jede Prozessabweichung kann nun durch eine Codezahl charakterisiert werden. Diese gespeicherten Erfahrungswerte werden mit der Codezahl des Testes verglichen, indem Stelle für Stelle die beiden Codezahlen verglichen und die jeweiligen Abweichungen aufsummiert werden. Ist die Gesamtabweichung unterhalb einer gewissen Grenze, so besteht Verdacht auf die durch den Vergleichstest definierte Prozessabweichung.

Dieser Vergleich ist leicht durch ein entsprechendes Rechnungsprogramm auszuführen. Es erübrigt sich deshalb, hier auf Einzelheiten des durch einen Mikrocomputer durchzuführenden Vergleichs einzugehen.

Das ganze Verfahren der Belichtung kann nach einem Spezialprogramm der Printersteuerung ablaufen. Die vier Vorschübe und drei Belichtungen werden automatisch ausgeführt und das Blatt wird in die Entwicklungsanlage eingeführt. Vorzugsweise wird auch die Auswertung durch ein mit dem Steuercomputer des Printers verbundenes Densitometer vorgenommen. Das Ergebnis des Testes kann dann als Displayzeile oder als Ausdruck auf einem eingebauten Drucker erscheinen.

### Patentansprüche

-----------------------------

1. Verfahren zur Entwicklungskontrolle für einen Colorprinter mit angeschlossener Papierentwicklung, gekennzeichnet durch Belichtung eines Teststreifens im Printer, wobei das lichtempfindliche Material in mehreren Stufen in die Belichtungsfläche vorgeschoben wird und mehrere Belichtungen in der Weise erhält, dass das erste belichtete Feld die stärkste Belichtung erhält, die nachfolgenden Felder sukzessive etwas weniger belichtet werden und ein letztes Feld ohne jegliche Belichtung vorgeschoben wird, derart, dass das erste Feld die Summe aller ausgeführten Belichtungen erhält, das zweite Feld die Summe der zweiten und aller nachfolgenden Belichtungen und so fort und wobei diese Belichtungsserie automatisch abläuft, und durch nachfolgende Entwicklung und Auswertung des Teststreifens.

2. Verfahren nach Anspruch·1, dadurch gekennzeichnet, dass von vier Feldern die ersten drei belichtet werden, wobei die zweite und die dritte Belichtung identisch sind und die erste Belichtung mindestens dreimal so

43 286

gross ist wie jede der nachfolgenden Belichtungen.

3. Verfahren nach Anspruch 1 oder 2, dadurch gekennzeichnet, dass zur Auswertung jede einzelne Messung der Farbdichte eines Feldes mit einem Referenzwert verglichen wird, die Abweichung vom Referenzwert als einstellige Zahl verschlüsselt wird, indem die Grösse der negativen oder positiven Abweichungen in höchstens zehn Klassen eingeteilt wird und jede Klasse einer einstelligen Codezahl entspricht, so dass dadurch die erhaltene Zahl mit gespeicherten Codezahlen vergleichbar ist, die jeweils eine bestimmte Abweichung des Entwicklungsprozesses repräsentieren.

4. Verfahren nach Anspruch 3, dadurch gekennzeichnet, dass aus den Codezahlen ein Code gebildet wird, der, entsprechend der Zahl der Messungen, 9- oder 12-stellig ist.

5. Verfahren nach Anspruch 3, dadurch gekennzeichnet, dass auf dem Teststreifen drei Felder belichtet werden, wobei das erste Feld zur Kontrolle der Maximaldichte, das dritte Feld zur Kontrolle der Empfindlichkeit, und das zweite Feld, im Vergleich zum dritten Feld, zur Bestimmung des Kontrasts belichtet sind und das vierte Feld der Schleiermessung dient.

6. Verfahren nach einem der Ansprüche 1 bis 6, dadurch gekennzeichnet, dass die Auswertung mit einem von der Steuerungsanordnung des Printers gesteuerten Densitometer vorgenommen wird.

7. Verfahren nach einem der Ansprüche 1-6, dadurch gekennzeichnet, dass auf dem Teststreifen Felder für jede der drei Grundfarben belichtet werden.